**Europäisches Patentamt**

**European Patent Office**

**Office européen des brevets**

(19)

(11) Numéro de publication : **0 437 386 B1**

## (12) FASCICULE DE BREVET EUROPEEN

(45) Date de publication du fascicule du brevet :
**09.09.92 Bulletin 92/37**

(51) Int. Cl.$^5$ : **G07F 7/10**

(21) Numéro de dépôt : **91400018.7**

(22) Date de dépôt : **07.01.91**

(54) **Verrous de sécurité pour circuit intégré.**

(30) Priorité : **09.01.90 FR 9000168**

(43) Date de publication de la demande :
**17.07.91 Bulletin 91/29**

(45) Mention de la délivrance du brevet :
**09.09.92 Bulletin 92/37**

(84) Etats contractants désignés :
**DE FR GB IT**

(56) Documents cités :
**EP-A- 0 313 430**
**EP-A- 0 314 148**
**DE-A- 3 838 940**
**FR-A- 2 603 404**
**FR-A- 2 613 102**
**US-A- 4 855 670**

(73) Titulaire : **SGS-THOMSON**
**MICROELECTRONICS S.A.**
**7, Avenue Galliéni**
**F-94250 Gentilly (FR)**

(72) Inventeur : **Sourgen, Laurent**
**Cabinet Ballot-Schmit, 7, rue Le Sueur**
**F-75116 Paris (FR)**

(74) Mandataire : **Schmit, Christian Norbert Marie**
**et al**
**Cabinet Ballot-Schmit 7, rue Le Sueur**
**F-75116 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

EP 0 437 386 B1

## Description

L'invention concerne les circuits intégrés; elle s'applique notamment, mais non exclusivement, aux circuits intégrés pour cartes à mémoire, et en particulier aux circuits dont l'élément essentiel est une mémoire électriquement programmable et effaçable nécessitant des mécanismes électroniques de sécurité.

Une sécurité est nécessaire dans de nombreuses applications où on désire que les informations stockées dans la mémoire ne puissent pas être lues ou ne puissent pas être modifiées par un utilisateur de la carte. C'est le cas par exemple dans les cartes bancaires, ou dans d'autres applications où le circuit intégré sert à effectuer des transactions ou des opérations ayant une valeur marchande. C'est le cas également dans les applications de contrôle d'accès, de contrôle d'identité d'un utilisateur, etc.

Dans d'autres applications, une sécurité peut être nécessaire pour modifier ou interdire certaines fonctions du circuit en fonction de l'utilisateur.

Par commodité pour l'explication de la présente invention, on se référera à une application de circuit intégré pour carte à mémoire nécessitant des mécanismes de sécurité protégeant contre l'accès à certaines zones ou certaines fonctions du circuit.

En pratique, le circuit intégré est vendu par un fabricant de circuits intégrés; la carte est vendue par ce qu'on appellera un "émetteur"; et la carte est utilisée par un "utilisateur" final. Par le mot émetteur, on se réfère ici à des applications telles que les applications bancaires où la banque "émet" des cartes à puces ayant une valeur monétaire. Cependant le mot "émetteur" ne doit pas se limiter à ce type d'application et il désignera dans la suite la personne ou l'organisme ou l'entreprise qui met en place un mécanisme de sécurité après avoir configuré certaines fonctions ou données de la carte et avant de fournir la carte à l'utilisateur final; l'émetteur aura accès à certaines fonctions du circuit, et l'utilisateur final aura accès à d'autres fonctions (plus généralement à des fonctions plus restreintes).

La fourniture des cartes à l'utilisateur final doit passer par les opérations suivantes: fabrication du circuit intégré; test du circuit intégré; fourniture du circuit testé à l'émetteur; mise en carte du circuit intégré par l'émetteur ou un fournisseur de l'émetteur; introduction de données, ou établissement d'une configuration particulière du circuit intégré (personnalisation par exemple) par l'émetteur, en fonction de l'utilisateur final; activation par l'émetteur d'un mécanisme de sécurité (présent dans le circuit intégré) qui interdit l'accès de l'utilisateur à certaines zones de circuit, notamment certaines zones de mémoire.

Pour le fabricant de circuit intégré, le problème se pose de la manière suivante: un test de toutes les fonctions et données du circuit intégré est nécessaire car le fabricant ne peut pas livrer des circuits défectueux à son client "émetteur". Le fabricant teste donc notamment toutes les zones de mémoire et les diverses fonctions du circuit.

L'invention repose sur la constatation que les tests effectués sont jusqu'à maintenant incomplets car ils ne permettent pas au fabricant de contrôler le fonctionnement dans la configuration exacte du circuit vu par l'utilisateur, c'est-à-dire après les traitements effectués par l'émetteur (établissement de configurations diverses, introduction de données, activation d'un verrou de protection).

Cette difficulté existe en outre aussi lorsque, dans certaines applications, le fabricant établit lui-même un mécanisme de sécurité qu'il active après les tests du circuit, avant de livrer le circuit à l'émetteur. En effet, en pratique, le fabricant ne peut pas tester le circuit dans la configuration exacte où il est reçu par l'émetteur, c'est-à-dire une configuration où le mécanisme de sécurité est activé.

Les difficultés se cumulent lorsque à la fois le fabricant et l'émetteur activent chacun un mécanisme de sécurité.

Les mécanismes de sécurité sont des verrous logiques irréversibles qui changent la fonctionalité du circuit lorsqu'ils sont activés; par exemple, ils interdisent l'accès à certaines parties du circuit intégré.

L'invention propose de réaliser un circuit intégré comprenant différentes fonctions électroniques, parmi lesquelles certaines fonctions peuvent être modifiées irréversiblement par l'activation d'un verrou électronique, ce circuit comprenant:

    – un premier verrou électronique apte à être verrouillé ou déverrouillé pendant une phase de test du circuit intégré et à être irréversiblement verrouillé après la fin de la phase de test,

    – et un deuxième verrou électronique apte à être déverrouillé seulement tant que le premier verrou est déverrouillé.

Grâce à cet ensemble de deux verrous qui sont provisoirement déverrouillables puis définitivement verrouillés et non déverrouillables, on peut accomplir des opérations de test beaucoup plus approfondies. Ces opérations de test permettent en particulier de tester les fonctionalités réduites ou modifiées du circuit, telles qu'elles seront disponibles pour l'utilisateur final, ce qui n'était pas possible dans la technique antérieure. Dans la technique antérieure, on ne pouvait en effet tester que les fonctionalités globales du circuit, sans pouvoir tester les fonctionalités réduites telles qu'elles existent après verrouillage.

Au sens de la présente invention, lorsqu'on parle de modifier certaines fonctions par un verrou électronique, on inclura les modifications de fonctions proprement dite, les modifications de configuration de circuit, les modifications de données enregistrées, les modifications d'accès à des zones de mémoire, en lecture ou en écriture, etc. sans limitation particulière.

Dans une réalisation particulièrement avantageuse, on utilisera comme verrou (premier verrou et/ou deuxième verrou) un ensemble de deux cellules de mémoire programmables et effaçables électriquement, la première cellule étant pourvue d'une commande de programmation ou d'effacement, et la deuxième cellule étant pourvue d'une commande de programmation et aussi d'une commande d'effacement, avec une porte OU-exclusif dont les entrées sont reliées chacune à une cellule respective.

Pour le premier verrou, on prévoit que l'une des commandes de la deuxième cellule de ce verrou est activable seulement pendant la phase de test; elle est inaccessible après la fin de la phase de test.

Pour le deuxième verrou, on prévoit que l'une des commandes de la deuxième cellule de ce verrou est inhibée par la sortie du premier verrou lorsque celui-ci est verrouillé.

De manière tout-à-fait avantageuse, on prévoit que la commande de verrouillage d'un verrou se fait par une commande d'effacement d'une des cellules et par une commande de programmation de l'autre. La commande de déverrouillage se fait alors (lorsqu'elle est possible) par une commande inverse pour la cellule qui dispose à la fois d'une commande de programmation et d'une commande d'effacement.

Le système de verrou électronique proposé ici permet de réaliser des opérations de test qui peuvent, selon l'invention, se dérouler de la manière suivante:
- on effectue un test général du circuit intégré alors que le premier verrou électronique est dans un état initial déverrouillé;
- on verrouille le premier verrou et on teste les fonctions modifiées par ce verrouillage;
- on verrouille le deuxième verrou et on teste les fonctions modifiées par ce deuxième verrouillage;
- on déverrouille le premier verrou;
- on déverrouille le deuxième verrou, ce déverrouillage étant rendu possible par le fait que le premier verrou est déverrouillé;
- on verrouille irréversiblement le premier verrou et on interdit par suite de ce verrouillage tout déverrouillage futur du deuxième verrou après qu'il sera activé.

Ce test est possible chez le fabricant du circuit intégré; il permet de tester le circuit alors que les fonctions sont modifiées par une sorte de simulation du verrouillage des deux verrous. On vérifie donc les fonctions modifiées non seulement par le premier verrou (verrou en principe activé par le fabricant après le test et avant fourniture à "l'émetteur"), mais aussi par le deuxième verrou (verrou activé par l'émetteur avant fourniture à l'utilisateur). Puis on revient à l'état initial (verrous déverrouillés) et on effectue enfin le premier verrouillage seul, et cela de manière irréversible.

Pour rendre le déverrouillage du premier verrou possible tout au long de la phase de test, on prévoit de préférence que le circuit intégré reste alimenté en tension pendant toute la phase de test et que la commande de déverrouillage peut être inhibée par une bascule du type "à basculement unique" ("one-shot latch"): une telle bascule peut changer d'état une fois lors de la première mise sous tension; à la coupure du courant elle rebascule dans un état d'où elle ne pourra plus sortir lors des remises sous tension ultérieures. La commande de déverrouillage ne sera alors plus disponible.

D'autres caractéristiques et avantages de l'invention apparaîtront à la lecture de la description détaillée qui suit et qui est faite en référence au dessin annexé dans lequel la figure unique représente un schéma du système de verrous électroniques incorporé à un circuit intégré selon l'invention.

Le circuit intégré selon l'invention est destiné à remplir différentes fonctions électroniques qui peuvent être quelconques (mémorisation de données, traitement de signaux logiques ou analogiques, etc.). Ces fonctions n'ont pas d'importance, mais l'important est qu'elles peuvent être modifiées par des verrous électroniques.

La modification peut porter par exemple sur une restriction d'accès à certaines zones d'une mémoire; elle peut porter aussi par exemple sur une restriction d'accès à certaines fonctions: par exemple autorisation de lecture seulement et interdiction d'écriture dans certaines zones de mémoire.

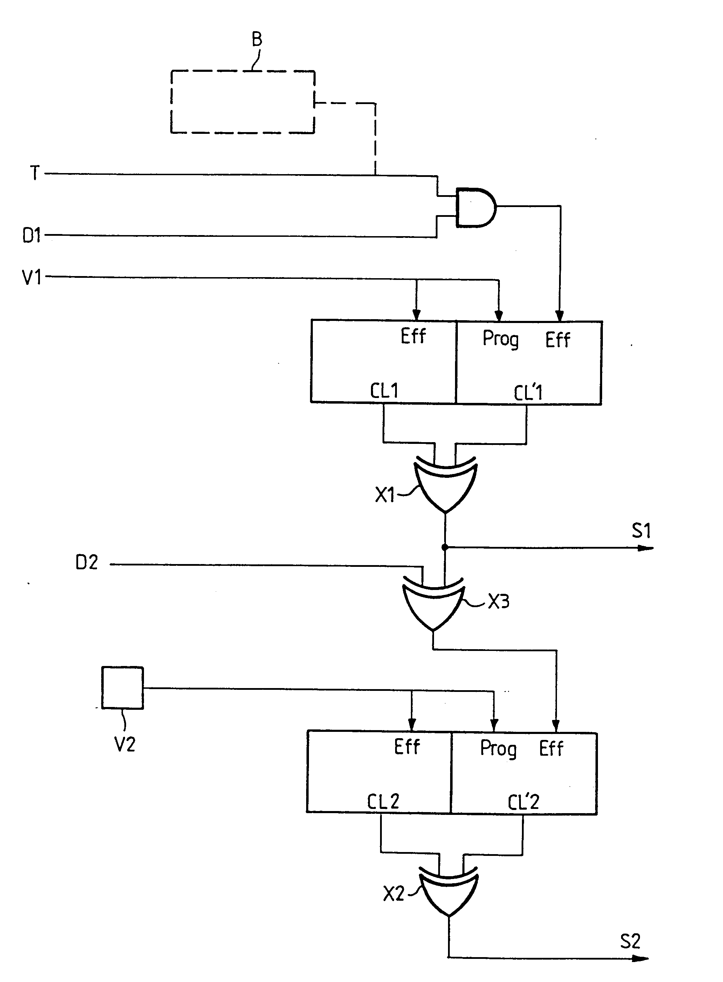

Sur le circuit de la figure 1, on a représenté un premier verrou fournissant, lorsque le verrouillage est activé, un signal S1 de modification de fonction du circuit intégré. En d'autres mots, avant verrouillage, le signal S1 peut être par exemple à un niveau logique bas (verrou non activé) alors qu'après verrouillage le signal S1 pourra être à un niveau logique haut. Le signal S1 contrôle une modification de fonctions du circuit intégré, principalement des fonctions d'accès.

Un deuxième verrou fournit un signal S2 lorsqu'il est activé. Le signal S2 contrôle d'autres modifications de fonction.

Le premier verrou est destiné à être activé par le fabricant de circuit intégré en vue d'un verrouillage irréversible, après la fin des tests et avant fourniture à un client. Le client est considéré ici comme "émetteur" de cartes destinées à des utilisateurs.

Le deuxième verrou est destiné à être activé par le client "émetteur", par exemple après avoir configuré le circuit d'une manière particulière (enregistrement de données), et avant fourniture à l'utilisateur final. Le deuxième verrou étant destiné à être activé par le client "émetteur", on a prévu sur le schéma de la figure un plot d'entrée du circuit intégré par lequel l'émetteur peut appliquer un signal de commande de verrouillage V2.

Au contraire, comme le premier verrou est destiné à être activé par le fabricant au cours d'opérations de test en usine, les signaux de verrouillage V1 et déverrouillage D1 du premier verrou ne sont pas nécessairement transmis par des bornes d'entrée/sortie du circuit intégré. Ils peuvent être des signaux internes au circuit intégré ou des signaux issus de plots de test sur tranche, non raccordés aux bornes de sortie. De même, en ce qui concerne le déverrouillage, le deuxième verrou peut être désactivé par un signal de déverrouillage D2 qui n'est pas forcément transmis par une borne externe du circuit intégré puisqu'il n'a pas à être produit ni par le client émetteur ni par l'utilisateur final.

Sur la figure les signaux de verrouillage V1 et de déverrouillage D1 et D2 ne sont pas représentés comme étant rattachés à des bornes d'entrée/sortie du circuit intégré. Cela n'exclut cependant pas la possibilité qu'ils le soient.

Le premier verrou comporte de préférence deux cellules de mémoire programmables et effaçables électriquement CL1 et CL'1, aussi identiques que possible et de préférence juxtaposées physiquement dans le circuit pour avoir des caractéristiques aussi identiques que possible. Il comporte aussi une porte OU-Exclusif X1 dont les deux entrées sont reliées chacune à une cellule respective.

Les circuits de lecture et d'écriture des deux cellules ne sont pas représentés. Le signal S1 indiquant si le verrou est verrouillé ou non est pris à la sortie de la porte X1 en mode de lecture des cellules. Le verrouillage et le déverrouillage sont effectués en mode d'écriture.

Dans l'exemple décrit, le verrou est considéré comme déverrouillé (S1=0) lorsque les deux cellules CL1 et CL'1 sont dans un état identique. Il est considéré comme verrouillé (S1=1) lorsque les cellules sont dans des états complémentaires (l'une programmée, l'autre effacée). Cela résulte de la présence de la porte OU-Exclusif en sortie des cellules.

L'une des cellules, par exemple CL1, comporte seulement une commande d'effacement (cela pourrait être seulement une commande de programmation, mais dans l'exemple décrit on considérera que c'est une commande d'effacement). L'autre cellule CL'1 comporte à la fois une commande d'effacement et une commande de programmation.

La commande de verrouillage s'effectue par une double opération consistant à effacer la première cellule CL1 et à programmer la deuxième CL'1. Sur la figure, cette double opération est symbolisée par une seule liaison électrique appliquant un signal de verrouillage V1 à la fois à l'entrée d'effacement de CL1 et à l'entrée de programmation de CL'1. Dans la réalité, il faut tenir compte du fait que les opérations d'effacement ou programmation sont plus complexes que la simple application d'un signal logique V1. Ces opérations sont très classiques pour les mémoires et ne seront pas décrites. La programmation et l'effacement peuvent être simultanés ou immédiatement successifs.

La commande de déverrouillage s'effectue, lorsqu'elle est possible, par effacement de la deuxième cellule CL'1. Mais si la première cellule CL1 ne comportait qu'une commande de programmation, la commande de déverrouillage s'effectuerait par programmation de la deuxième cellule.

Le deuxième verrou peut être constitué exactement de la même manière que le premier, avec une première cellule CL2 comportant seulement une commande d'effacement et une deuxième cellule CL'2 comportant à la fois une commande d'effacement et une commande de programmation. Une porte OU-Exclusif X2 reçoit sur ses deux entrées respectivement la sortie de la première et de la deuxième cellule. En mode de lecture des cellules, le signal S2, indiquant si le deuxième verrou est activé ou non, est prélevé à la sortie de la porte X2. La commande de verrouillage s'effectue par le signal V2 qui efface la première cellule CL2 et programme la deuxième CL'2. La commande de déverrouillage s'effectue (lorsqu'elle est possible) par effacement de la deuxième cellule.

Enfin, comme on le voit sur la figure, on a prévu des moyens pour que le signal de déverrouillage D2 du deuxième verrou ne puisse être appliqué à l'entrée d'effacement de la cellule CL'2 que lorsque le premier verrou est déverrouillé (S1=0). Une porte OU exclusif X3 recevant le signal D2 et la sortie S1 figure cette interdiction de manière symbolique. D'autre part, on a prévu également des moyens pour que le signal de déverrouillage D1 du premier verrou ne puisse être appliqué à l'entrée d'effacement de la deuxième cellule CL'1 que pendant la phase de test du circuit intégré (test par le fabricant), tout déverrouillage étant ensuite impossible (pour le client et pour l'utilisateur final). Sur la figure, cette fonction est symbolisée par une porte ET recevant le signal D1 et le laissant passer sous le contrôle d'un signal T présent pendant le test et non après le test, ou encore sous le contrôle d'une bascule B (en pointillés sur la figure) qui est activable une seule fois ("one-shot"); cette bascule passe lors du test dans un état qui autorise le déverrouillage; lorsqu'on cesse d'alimenter le circuit intégré après la fin du test, elle repasse dans un autre état qui interdit le déverrouillage, et sa caractéristique est qu'elle ne peut plus repasser dans le premier état lorsqu'elle est remise sous tension.

Le fonctionnement général du circuit et le procédé de test selon l'invention sont les suivants:

A la fin de la fabrication du circuit, les cellules de mémoire électriquement programmables constituant les verrous sont dans un état qui est en principe "effacé". Elles sont en principe constituées par des transistors à grille flottante qui ont normalement leur grille flottante dépourvues de charges électriques. Toutefois on n'en est pas absolument sûr. Le plus probable est en tout cas que les cellules sont toutes chargées de la même manière, même si elles ne sont pas franchement dans l'état effacé. C'est la raison pour laquelle chaque verrou comporte deux cellules identiques, l'état non verrouillé étant un état initial quelconque (en principe effacé mais pas forcément) pour lequel les cellules fournissent un même signal de sortie et pour lequel par conséquent la porte OU-Exclusif X1 ou X2 fournit un niveau logique zéro.

Le test final après fabrication est effectué d'abord avec les verrous déverrouillés, c'est-à-dire avant tout actionnement des commandes de verrouillage V1 et V2.

Puis, on verrouille par la commande V1 le premier verrou. A partir de là, on prévoit que le courant d'alimentation du circuit intégré n'est plus coupé jusqu'à la fin du test. Cela du moins dans le cas où on prévoit que c'est une bascule B à basculement unique qui sert à interdire le déverrouillage après la fin du test. La coupure du courant mettra en effet la bascule dans un état d'où elle ne pourra plus sortir même en cas de remise sous tension, et cet état est celui qui commande l'inhibition de la commande de déverrouillage D1.

Le verrouillage par la commande V1 consiste comme on l'a dit, en mode d'écriture et non de lecture des cellules CL1 et CL'1, à appliquer les signaux d'effacement de la cellule CL1 (même si elle était déjà effacée) et de programmation de la cellule CL'1. Le passage des deux cellules dans des états complémentaires provoque le passage à l'état haut de la sortie S1 de la porte OU-Exclusif X1 (en mode de lecture).

On effectue alors le test du circuit intégré avec la configuration et les fonctions modifiées par le premier verrou.

On verrouille ensuite par le signal V2 le deuxième verrou : en mode d'écriture des cellules CL2 et CL'2, on efface CL2 et on programme CL'2. En mode de lecture, la sortie de la porte OU-Exclusif X2 passe à l'état haut par suite du passage des cellules dans des états complémentaires. La configuration ou les fonctions du circuit intégré sont alors modifiées comme si le client "émetteur" les avait modifiées.

On teste le circuit dans cette configuration modifiée.

On déverrouille le premier verrou, par la commande D1 (non inhibée par la bascule B). Cette commande agit pour effacer la cellule CL'1, en la mettant donc dans le même état que la cellule effacée CL1. Cela remet à zéro le signal S1 en sortie de la porte OU-Exclusif X1 et cela permet ensuite de déverrouiller le deuxième verrou par la commande D2.

Le déverrouillage du deuxième verrou se fait comme celui du premier : par effacement de la cellule CL'2, ce qui remet à zéro le signal S2 à la sortie de la porte X2.

Si cela est nécessaire pour d'autres opérations de test, on peut répéter plusieurs fois le verrouillage du premier et du deuxième verrou, des opérations de test, puis le déverrouillage des verrous.

Après la fin des tests, on verrouille irréversiblement le premier verrou par action de la commande de verrouillage V1 (effacement de la cellule CL1 et programmation de CL'1).

Le deuxième verrou reste déverrouillé (deux cellules CL2, CL'2 effacées).

On coupe le courant d'alimentation; la bascule B à basculement unique prendra irréversiblement lors de la mise sous tension un état qui inhibe tout passage du signal de déverrouillage D1.

Le circuit est prêt à être livré au client. Celui-ci pourra activer une fois et une seule la commande de verrouillage V2 après avoir fait par exemple des opérations de configuration, d'introduction de données, etc. Ces opérations peuvent être par exemple l'introduction dans une zone de mémoire de nombres représentant par exemple des sommes d'argent, ou encore une identification d'utilisateur, etc.

Après verrouillage définitif par la commande V2, le deuxième verrou ne peut pas être déverrouillé puisque le premier verrou interdit tout déverrouillage du second.

On a pu tester le circuit dans la configuration initiale en sortie de fabrication, puis dans la configuration intermédiaire telle que livrée au client émetteur, et enfin dans la configuration finale vue par l'utilisateur.

**Revendications**

1. Circuit intégré comprenant différentes fonctions électroniques, parmi lesquelles certaines fonctions peuvent être modifiées irréversiblement par l'activation d'un verrou électronique, ce circuit étant caractérisé en ce qu'il comprend:
   – un premier verrou électronique (CL1, CL'1, X1) apte à être verrouillé ou déverrouillé pendant une phase de test du circuit intégré et à être irréversiblement verrouillé après la fin de la phase de test,
   – et un deuxième verrou électronique (CL2, CL'2, X2) apte à être déverrouillé seulement tant que le premier verrou est déverrouillé.

2. Circuit intégré selon la revendication 1, caractérisé en ce que l'un au moins des verrous est constitué par un ensemble de deux cellules de mémoire programmables et effaçables électriquement, la première cellule (CL1, CL2) étant pourvue d'une commande de programmation ou d'effacement, et la deuxième cellule (CL'1, CL'2) étant pourvue d'une commande de programmation et d'une commande d'effacement, avec une porte OU-exclusif (X1, X2) dont les entrées sont reliées chacune à une cellule respective.

3. Circuit intégré selon la revendication 2, caractérisé en ce que l'une des commandes de la deuxième cellule du deuxième verrou est inhibée par la sortie du premier verrou lorsque celui-ci est verrouillé.

4. Circuit intégré selon la revendication 2, caractérisé en ce que la commande de verrouillage d'un verrou se fait par une commande d'effacement d'une des cellules et par une commande de programmation de l'autre.

5. Circuit intégré selon la revendication 4, caractérisé en ce que la commande de déverrouillage se fait par une commande inverse pour la cellule qui dispose à la fois d'une commande de programmation et d'une commande d'effacement.

6. Circuit intégré selon l'une des revendications précédentes, caractérisé en ce que le premier verrou comporte une commande de déverrouillage avec une bascule à basculement unique pour autoriser le déverrouillage pendant la phase de test et pour interdire définitivement le déverrouillage après coupure de l'alimentation du circuit intégré à la fin de la phase du test.

7. Procédé de test d'un circuit intégré suivant la revendication 1, caractérisé en ce qu'il comporte les opérations successives suivantes:
   – on effectue un test général du circuit intégré alors que le premier verrou électronique est dans un état initial déverrouillé;
   – on verrouille le premier verrou et on teste les fonctions modifiées par ce verrouillage;
   – on verrouille le deuxième verrou et on teste les fonctions modifiées par ce deuxième verrouillage;
   – on déverrouille le premier verrou;
   – on déverrouille le deuxième verrou, ce déverrouillage étant rendu possible par le fait que le premier verrou est déverrouillé;
   – on verrouille irréversiblement le premier verrou et on interdit par suite de ce verrouillage tout déverrouillage futur du deuxième verrou après activation de ce dernier.

**Patentansprüche**

1. Integrierter Schaltkreis, umfassend verschiedene elektronische Funktionen, von denen bestimmte Funktionen irreversibel durch die Betätigung eines elektronischen Riegels modifiziert werden können, wobei die Schaltung dadurch **gekennzeichnet** ist, daß sie aufweist:
   – einen ersten elektronischen Riegel (CL1, CL'1, X1), der geeignet ist, während einer Testphase des integrierten Schaltkreises verriegelt oder entriegelt zu werden und nach dem Ende der Testphase irreversibel verriegelt zu werden,
   – und einen zweiten elektronischen Riegel (CL2, CL'2, X2), der lediglich solange geeignet ist, entriegelt zu werden, wie der erste Riegel entriegelt ist.

2. Integrierter Schaltkreis nach Anspruch 1, daurch **gekennzeichnet**, daß wenigstens der eine der Riegel aus einem Satz von zwei programmierbaren und elektrisch löschbaren Speicherzellen besteht, wobei die erste Zelle (CL1, CL2) mit einer Programm- oder Löschsteuerung versehen ist und die zweite Zelle (CL'1, CL'2) mit einer Programmsteuerung und einer Löschsteuerung versehen ist, mit einem exklusiven ODER-Glied (X1, X2), dessen Eingänge jeweils mit einer entsprechenden Zelle verbunden sind.

3. Integrierter Schaltkreis nach Anspruch 2, dadurch **gekennzeichnet**, daß die eine der Steuerungen der zweiten Zelle des zweiten Riegels durch den Ausgang des ersten Riegels gesperrt ist, wenn dieser verriegelt ist.

4. Integrierter Schaltkreis nach Anspruch 2, dadurch **gekennzeichnet**, daß die Verriegelungssteuerung eines Riegels durch einen Löschbefehl der einen der Zellen und durch einen Programmierbefehl der anderen erfolgt.

5. Integrierter Schaltkreis nach Anspruch 4, dadurch **gekennzeichnet**, daß der Entriegelungsbefehl durch einen Inversbefehl für die Zelle erfolgt, die zugleich einen Programmierbefehl und einen Löschbefehl vorsieht.

6. Integrierter Schaltkreis nach einem der vorhergehenden Ansprüche, dadurch **gekennzeichnet**, daß der erste Riegel eine Entriegelungssteuerung mit einem Kippglied mit einmaligem Kippen umfaßt, um die Entriegelung während der Testphase zu gestatten und um die Entriegelung nach Abtrennung der Versorgung des integrierten Schaltkreises am Ende der Testphase definitiv zu sperren.

7. Testverfahren für einen integrierten Schaltkreis nach Anspruch 1, dadurch **gekennzeichnet**, daß es die folgenden aufeinanderfolgenden Operationen umfaßt:
   – es wird ein allgemeiner Test des integrierten Schaltkreises ausgeführt, sobald sich der erste elektronische Riegel in einem entriegelten Anfangszustand befindet;
– es wird der erste Riegel verriegelt und es werden die durch diese Verriegelung modifizierten Funktionen getestet;
– es wird der zweite Riegel verriegelt und es werden die durch die zweite Verriegelung modifizierten Funktionen getestet;
– es wird der erste Riegel entriegelt;
– es wird der zweite Riegel entriegelt, wobei die Entriegelung aufgrund der Tatsache möglich gemacht ist, daß der erste Riegel entriegelt ist;
– es wird der erste Riegel irreversibel verriegelt und es wird infolge der Verriegelung jegliche zukünftige Entriegelung des zweiten Riegels nach Aktivierung des letzteren gesperrt.

**Claims**

I. An integrated circuit comprising various electronic functions, among which certain functions may be irreversibly changed by the activation of an electronic lock, this circuit being characterized in that it comprises:
– a first electronic lock (CLI, CL'I, XI) adapted to be locked or unlocked during a test phase of the integrated circuit and to be irreversibly locked after the end of the test phase, and
– a second electronic lock (CL2, CL'2, X2) adapted to be unlocked only when the first lock is unlocked.

2. An integrated circuit according to claim 1, characterized in that at least one of the locks is constituted by an assembly of two electrically programmable and erasable memory cells, the first cell (CLI, CL2) being provided with a programming or erasure command and the second cell (CL'I, CL'2) being provided with a programming command and an erasure command, with an exclusive-OR gate (XI, X2) the inputs of which are each connected to a respective cell.

3. An integrated circuit according to claim 2, characterized in that one of the commands of the second cell of the second lock is inhibited by the output of the first lock when the latter is locked.

4. An integrated circuit according to claim 2, characterized in that the command for locking a lock is provided by an erasure command for one of the cells and by a programming command for the other.

5. An integrated circuit according to claim 4, characterized in that the command for unlocking is provided by an opposite command in the case of the cell which can utilize both a programming command and an erasure command.

6. An integrated circuit according to any one of the preceding claims, characterized in that the first lock comprises a command for unlocking including a switch, having a single switched position, for authorising unlocking during the test phase and for permanently preventing unlocking after interruption of the supply to the integrated circuit at the end of the test phase.

7. A method for testing an integrated circuit in accordance with claim I, characterized in that it comprises the following successive operations:
– a general test of the integrated circuit is performed whilst the first electronic lock is in an initial unlocked state;
– the first lock is locked and the functions altered by this locking are tested;
– the second lock is locked and the functions altered by this second locking are tested;
– the first lock is unlocked;
– the second lock is unlocked, this unlocking being made possible because the first lock is unlocked;
– the first lock is irreversibly locked and as a result of this locking any subsequent unlocking of the second lock after activation of the latter is prevented.